Europäisches Patentamt

European Patent Office

Office européen des brevets

(19)

(11) Publication number: 0 486 705 A1

# EUROPEAN PATENT APPLICATION
## published in accordance with Art. 158(3) EPC

(21) Application number: 91911191.4

(22) Date of filing: 14.06.91

(86) International application number:
PCT/JP91/00803

(87) International publication number:
WO 91/19463 (26.12.91 91/29)

(51) Int. Cl.⁵: A61C 13/01

(30) Priority: 15.06.90 JP 157051/90
15.06.90 JP 157052/90
15.06.90 JP 157053/90

(43) Date of publication of application:
27.05.92 Bulletin 92/22

(84) Designated Contracting States:
DE ES FR GB IT

(71) Applicant: UBE INDUSTRIES, LTD.
32-12, Nishihonmachi 1-chome
Ube-shi Yamaguchi-ken 755(JP)

(72) Inventor: AKIMOTO, Yoshiteru, Hirakata Lab.
Ube Industries, Ltd., 3-10, Nakamiya
Kita-machi
Hirakata-shi, Osaka-fu 573(JP)

(74) Representative: Marx, Lothar, Dr.
Patentanwälte Schwabe, Sandmair, Marx
Stuntzstrasse 16
W-8000 München 80(DE)

(54) DEVICE FOR FORMING DENTURE PLATE.

(57) A press for forming a denture plate, which is composed of: an upper fixed bed to which an upper plaster mold for holding artificial teeth is fixed; a movable bed to which a lower plaster mold on which a thermoplastic resin preform is mounted; and a pneumatic driving cylinder suspending down to a lower fixed bed and having the tip of piston rod thereof fixed to the movable bed, in which the pneumatic driving cylinder comprises a hydraulic cylinder and pneumatic booster integral with each other. A heating device for forming a denture plate comprising: a heating box horizontally movable between a pressing zone and an outer position; a driving device moving in the vertical direction perpendicular to the moving direction of the heating box; and a connecting mechanism for connecting the heating box to a driving mechanism, wherein the connecting mechanism is provided with a function to change the moving direction thereof between the vertical and horizontal ones. The heating box for denture plate formation comprising an upper chamber and a lower one, in which a far-infrared heater is provided in the lower chamber so that the cross-sectional shape for softening the thermoplastic resin preform mounted on the lower plaster mold corresponds to the shape of the preform and the upper chamber is defined by a heating plate whose heat source is the far-infrared heater in the lower chamber for keeping the upper plaster mold at a constant temperature, the heating plate being provided with means for generating far-infrared ray. Shortening of time for compression molding, reduction in the size of the whole of device, and uniform heating and softening of the thermoplastic resin preform are enabled by such a construction.

# F I G.1

## FIELD OF THE INVENTION

This invention relates a press for forming dentures from thermoplastic resin. Specifically this invention relates to a press for forming dentures such as a pressing device, a heating device, and a heating box etc. for forming dentures. By this invention time required for a forming process of a heated, softened thermoplastic resin preform to form dentures is shortened by a highly efficient forming operation, and the size of the press can become compact.

## BACKGROUND OF THE INVENTION

Recently engineering plastics that has satisfactory mechanical strength and that is safe to a human body, has been researched to be applied to materials for dentures. For example, polycarbonate dentures, polysulphone dentures, and so on have been prepared by an injection molding method. However, this injection molding method requires an expensive injection molding machine to form dentures.

On the other hand a convenient method using an inexpensive compression molding machine has been known to form dentures made of thermoplastic resin; in this method a preformed material similar in shape to dentures to be prepared is heated and softened on a lower plaster mold, followed by compression molding.

As an example for such an apparatus for the compression molding method, Japanese Utility Model Application Laid-Open No. 59-57919 (1984) has disclosed an apparatus for manufacturing dentures which is composed of a compression molding device, a constant-temperature chamber to heat and soften thermoplastic resin, and a guide to move a lower plaster mold to a position just below an upper plaster mold.

The constant-temperature chamber in this apparatus keeps a lower mold inside itself, on which a thermoplastic synthetic resin plate is mounted. When the lower mold is heated, the thermoplastic synthetic resin plate on the mold is heated also and softened. Then the lower mold is taken out of the constant-temperature chamber while the thermoplastic synthetic resin plate on it remains heated and softened. The lower mold which the plate is mounted on is then moved to a position just below an upper mold along a guide. Finally the plate mounted on the lower mold undergoes compression molding by compressing the upper and the lower molds. As mentioned above, after heating a lower mold in a constant-temperature chamber disposed in a different place from a pressing zone in the apparatus mentioned above, the lower mold is moved into a pressing zone, followed by compression molding.

However, the need has been showing up in these days to perform compression molding in a shorter period of time to manufacture dentures more efficiently. Japanese Utility Model Application Laid-Open No. 59-57919 (1984) that disclosed the apparatus mentioned above, has not disclosed anything concerning to shorten time for compression molding or to make the apparatus more compact.

Either an upper mold or a lower mold in the apparatus is not compressed together just after being heated. The upper mold is preheated in a preheating chamber, which is not shown in figures, and then it is held in a specified position in a pressing zone. Finally the upper mold moves down onto a lower mold below, which is moved out of a constant-temperature chamber, to perform compression molding.

Moreover, the apparatus mentioned above has not shown specific elements of a constant-temperature chamber in any figures to heat and soften thermoplastic resin, though the chamber itself has been disclosed in the specification. Therefore, an arrangement, a shape, and so on of a heater to heat an upper plaster mold and a lower plaster mold in a constant-temperature chamber has not concretely been disclosed in the apparatus mentioned above.

Therefore, the first object of the present invention is to provide a pressing device for forming dentures: in which compression molding to manufacture dentures is efficiently performed; in which time required for a forming process is shortened; and in which the size of the apparatus can become compact.

The second object of the present invention is to provide a heating device for forming dentures in which an overall press achieves a compact size and which operates reliably.

The third object of the present invention is to provide a heating box for forming dentures in which a position and a shape of a heater are specified to enable an effective heating of each of an upper plaster mold and a lower plaster mold.

## DISCLOSURE OF THE INVENTION

The first object of the present invention mentioned above is achieved by a pressing device for forming dentures, which comprises: an upper stationary platen on which an upper plaster mold containing an artificial tooth is held; a movable platen, disposed below the upper stationary platen, on which a lower plaster mold is held, wherein a softened thermoplastic resin preform is mounted on the lower plaster mold; and a pneumatic driving cylinder mechanism comprising a piston rod, disposed below and connected to a lower stationary platen, the top end of the piston rod being fixed to the movable platen; wherein the pneumatic driving cylinder mechanism comprising a driving cylinder operated by hydraulic pressure and a pneumatic booster integral with each other.

The second object of the present invention mentioned above is achieved by a heating device for forming dentures, which comprises: a heating box movable in approximately horizontal directions between a pressing zone and an outer position, wherein a thermoplastic resin preform mounted upon a lower plaster mold is pressed against an upper plaster mold in the pressing zone; a driving mechanism comprising a second piston rod that moves in approximately vertical directions perpendicular to the approximately horizontal directions in which the heating box moves; and a connecting mechanism for connecting the heating box to the driving mechanism, wherein the connecting mechanism is provided with a function to change the approximately vertical directions into the approximately horizontal directions and vice versa.

Preferably the connecting mechanism in the heating device mentioned above comprises a plate spring or a link mechanism. When a heating box moves into a pressing zone, a reliable movement to a specified position in a pressing zone realizes in either way.

The third object of the present invention is achieved by a heating box for forming dentures, which comprises: a lower chamber comprising a far-infrared heater, wherein in order to soften a thermoplastic resin preform mounted on a lower plaster mold, a shape of a cross section of the far-infrared heater approximately corresponds to a shape of the preform ; and an upper chamber comprising a heating board having its heat source as the far-infrared heater, the heating board being provided with means for generating far-infrared rays; wherein the lower chamber and the upper chamber are in a vertical arrangement.

Effect of the present invention is disclosed below.

According to a pressing device for forming dentures in the present invention a thermoplastic resin preform mounted on a lower plaster mold on a movable platen is heated and softened, moved up toward a fixed upper plaster mold, and pressed against the upper plaster mold to form dentures; in these processes a pneumatic driving cylinder mechanism with a specific structure is employed.

This pneumatic driving cylinder mechanism is basically composed of a hydraulic cylinder and a pneumatic booster, and its effect is briefly disclosed below.

A movable platen, which a lower plaster mold is mounted on, connected to a hydraulic piston and a piston rod in the hydraulic cylinder, is moved up in a high speed in a short period of time toward an upper plaster mold by a compressed air provided from the first port through a pressure converter which converts a pneumatic pressure to a hydraulic pressure. When a movable platen reaches to a specified position close to an upper plaster mold, a detector detects it. Then compressed air is provided from the second port in the pneumatic booster, and a ram operated by the air pressure pushes a hydraulic piston in a low speed with strong thrust to press a lower plaster mold against an upper plaster mold.

Since a pressing device according to the present invention employs a pneumatic driving cylinder mechanism that combines a high-speed drive and a low-speed, strong-thrust drive, time required for a forming process is shortened; to perform compression molding to form dentures has become efficient; and the size of a whole apparatus becomes compact. Usually a hydraulic cylinder operated by a hydraulic pump is employed to achieve strong thrust. However, to adopt such a hydraulic cylinder in the pressing device according to the present invention would require a hydraulic unit that contains a hydraulic pump, a tank, a strainer, a diverter, a relief valve, and the other necessary parts to result in a larger apparatus.

Secondly, a heating device for forming dentures in the present invention comprises a heating box, its driving mechanism, a connecting mechanism that connect between them and that is provided with a function to change approximately vertical directions into approximately horizontal directions and vice versa. Therefore, a heating box, its driving mechanism, and a connecting mechanism that connects the heating box and the driving mechanism, are organically arranged to make the whole apparatus compact and to achieve reliable movements of the heating box into a specified position in a pressing zone.

Thirdly, a heating box for forming dentures in the present invention has an internal structure, as mentioned above, composed of a lower chamber and an upper chamber, and means for generating far-infrared rays is provided in each of chambers are properly arranged to heat a lower plaster mold and an upper plaster mold. Therefore, a thermoplastic resin preform is uniformly heated and softened.

Moreover, according to the present invention a far-infrared heater is provided as one heat source in the lower chamber to heat and soften a thermoplastic resin preform on a lower plaster mold. Simultaneously in order to generate far-infrared rays from a heating board in the upper chamber and to keep an upper plaster mold at a specific temperature, the far-infrared heater heats a heating board, provided with means to generate far-infrared rays, to a temperature different from that in the lower chamber.

To form dentures each of differing temperatures of atmospheres for an upper plaster mold and a lower plaster mold needs to be separately adjusted. In order not to thermally deform an artificial tooth the temperature is adjusted to about 130 °C of an atmosphere in an upper chamber where an upper plaster mold containing an artificial tooth is located. To soften a thermoplastic resin preform the temperature is adjusted to about 380 °C of an atmosphere in a lower chamber where a lower plaster mold on which the preform is mounted is located.

The heating box according to the present invention, which is provided with: a heating board in an upper chamber to generate far-infrared rays and to keep an upper plaster mold at a constant temperature; and a far-infrared heater in a lower chamber to heat a thermoplastic resin preform on a lower plaster mold, moves into a space between an upper plaster mold and a lower plaster mold, which are held on a pressing device. Then the heating box heats an upper plaster mold and a lower plaster mold at specific temperatures mentioned above. After heating and softening a thermoplastic resin preform, the heating box is moved out of the space, followed by performing compression molding on the preform.

BRIEF DESCRIPTION OF THE DRAWINGS

Fig. 1 is a cross section, which especially shows a pressing device in detail, from a side through an embodiment of the press according to the present invention.

Fig. 2 is a cross section, which especially shows a heating device in detail, from a side through an embodiment of the press according to the present invention.

Fig. 3 shows a view of a link mechanism, which is an embodiment of a connecting mechanism.

Fig. 4 shows a heating box for forming dentures according to the present invention; the left half is a cross section from the front, and the right half is a view from the front.

Fig. 5 is a view of a heating box for forming dentures according to the present invention from its right side, and a part of it shows a cross section.

THE BEST MODE OF CARRYING OUT THE INVENTION

The present invention is disclosed below more in detail with the embodiment shown in the drawings but it shall not be limited to the following embodiment.

First of all a pressing device in the press according to the present invention is disclosed.

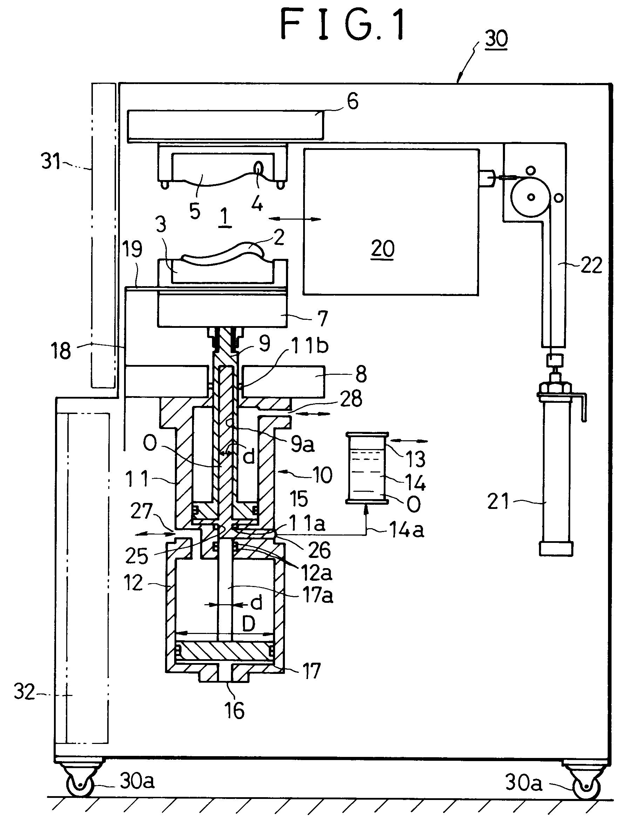

Fig. 1 is a cross section, which especially shows a pressing device in detail, from a side through an embodiment of the press according to the present invention.

In Fig. 1 a pressing zone is designated as 1, and this space accommodates a lower plaster mold 3 which a thermoplastic resin preform 2 is mounted on, and an upper plaster mold 5, which holds at least one artificial tooth 4 inside itself. The upper plaster mold 5 and the lower plaster mold 3 are fixed to the upper stationary platen 6 and a movable platen 7, respectively. The movable platen 7 is fixed to the top end of a piston rod 9, and it is movable in the direction toward the upper plaster mold 5. The piston rod 9 is disposed in a pneumatic driving cylinder mechanism 10 attached to and disposed below the lower stationary platen 8.

The pneumatic driving cylinder mechanism 10 is basically composed of a hydraulic cylinder 11 and a pneumatic booster 12 integral with each other. The pneumatic booster 12 contains a pressure intensifying piston 17 and a ram 17a inside the pneumatic booster 12 itself, and the ram 17a is integrally fixed to the pressure intensifying piston 17. A hydraulic cylinder 11 contains a hydraulic piston 15 and its piston rod 9. The piston rod 9 has a hollow 9a inside itself that extends along the axis of the rod from the open end in bottom to the other closed end in top, and the ram 17a in the pneumatic booster 12 can insert into the hollow 9a. Oil seals are designated as 11a, 11b, and 12a in Fig. 1.

The ram 17a mentioned above penetrates a hole 25 in a connecting portion between the hydraulic cylinder 11 and the pneumatic booster 12. An aperture 26 for the passage of hydraulic oil is provided with the hole 25, and the aperture 26 is connected through an oil tube 14a to the bottom portion of a converter 14, which converts a pneumatic pressure to a hydraulic pressure.

The outer diameter, d, of the ram 17a in the pneumatic booster 12, which is the same as the inner diameter of the hole 25, is chosen to be much smaller than the outer diameter, D, of the pressure intensifying piston 17. For example, in this embodiment a ratio of the area of a horizontal cross section of the ram 17a with its outer diameter of d and that of the pressure intensifying piston 17 with its outer diameter of D is 1:30, which corresponds to a pressure intensifying ratio.

The press 30, which contains the pressing device according to the present invention inside, is provided with casters 30a in its bottom so that the press 30 can move easily. A lower stationary platen 8 is fixed to horizontal members, not shown in the figures, that are part of a main framework of the press 30 according to the present invention. The press 30 according to the present invention is provided with a door 31, and through the door 31 a lower plaster mold 3 and and an upper plaster mold 5 are transferred into and out of a pressing zone. A controlling board is designated as 32 in Fig. 1. The lower stationary platen 8 is connected to an upper stationary platen 6 through two tie rods disposed in the right and the left sides of a piston rod 9 from the view shown in Fig. 1, though the tie rods are not shown in Fig. 1. A movable platen 7 slides along the tie rods to elevate and descend, and the tie rods help the movable platen 7 stabilized in horizontal directions.

How this pressing device according to the present invention operates is disclosed below.

A converter 14, which converts a pneumatic pressure to a hydraulic pressure, is provided with a pneumatic pressure by compressed air. Thus oil designated as o in the converter 14 fills a head chamber of the hydraulic cylinder 11 and the hollow 9a through an oil tube 14a and the aperture 26 for the passage of hydraulic oil. Then a movable platen 7, which is connected to a hydraulic piston 15 (and to a piston rod 9), elevates in "high speed" toward the direction of an upper plaster mold 5. Fig. 1 shows a state in which oil o is full in the head chamber and the hollow 9a but in which the movable platen 7 has not elevated yet.

A lower plaster mold 3 on which a thermoplastic resin preform is mounted, is disposed on the movable platen 7. When the movable platen 7 reaches to a specified position in which the lower plaster mold 3 is about to touch the upper plaster mold 5, a device such as a limit switch, not shown in Fig. 1, detects the position and changes into a mode of intensifying pressure. A rate of elevation in "high speed" without load or with low load mentioned above is usually 15 to 45 mm/sec., and an operating pneumatic pressure is 3 to 7 kg/cm$^2$.

In the mode of intensifying pressure a pneumatic booster 12 is provided with a pressure by compressed air through the second port 16. Then a ram 17a in the pneumatic booster 12 elevates through the hole 25, and the top end of the ram 17a enters into a head chamber in the hydraulic cylinder 11. At the same time an aperture 26 for the passage of hydraulic oil is closed. When a preform 2 on the lower mold 3 has not touched the upper mold 5, the piston rod 9 and thus the lower mold 3 also elevate to the same extent as the ram 17a elevates without load.

When a preform 2 on the lower mold 3 touches the upper mold 5 to give load, the ram 17a compresses the oil stored in the hydraulic cylinder 11 to push the piston rod 9 in the hydraulic cylinder 11 with thrust intensified by a pressure intensifying ratio, for example a ratio of 30. When a pressing operation is completed, part of the top end of the ram 17 is inserted into the hollow 9a in the piston rod 9. Since the area of a horizontal cross section of the head in the pressure intensifying piston 17 in the pneumatic booster 12 is much larger than that of a ram 17a by, for example, 30 times, the piston rod 9 elevates in "low speed" with strong thrust, such as 30 times as much as a sole air pressure. This slow elevation of the piston rod 9 with the strong thrust compresses the lower plaster mold 3 against the upper plaster mold 5 to perform compression molding on a thermoplastic resin preform 2.

A rate of elevation in this "low speed" is usually 15 to 30 mm/sec., and thrust for pressing is about 2.5 to 4 ton to perform compression molding.

After completing the compression molding on a thermoplastic resin preform 2, a rod chamber in the pneumatic booster 12 is provided with compressed air through the third port 27, and a rod chamber in the hydraulic cylinder 11 is also provided with compressed air through the fourth port 28. The compressed airs descend the ram 17a and the piston rod 9 along with the movable platen 7 so that the lower mold 3 detaches from the upper mold 5. Both of the molds are taken out through a door 31. Dentures left on the lower mold 3 is removed.

The pressing device in the present embodiment operates by compressed air that is convenient to work with and that does not require large-scale equipment. Since a pneumatic driving cylinder mechanism that gives a high pressure intensifying ratio is employed in the pressing device, the mechanism can become smaller; thus the pressing device itself becomes compact. Therefore, a space necessary for the pressing device is rather small, and it is easy to operate the pressing device.

To prevent a potential accident in which an operator of the pressing device gets clamped between a movable platen 7 and a lower stationary platen 8, a safety board 18 is provided in front of the pressing device as part of fixture 19 for a lower plaster mold 3 in the embodiment above.

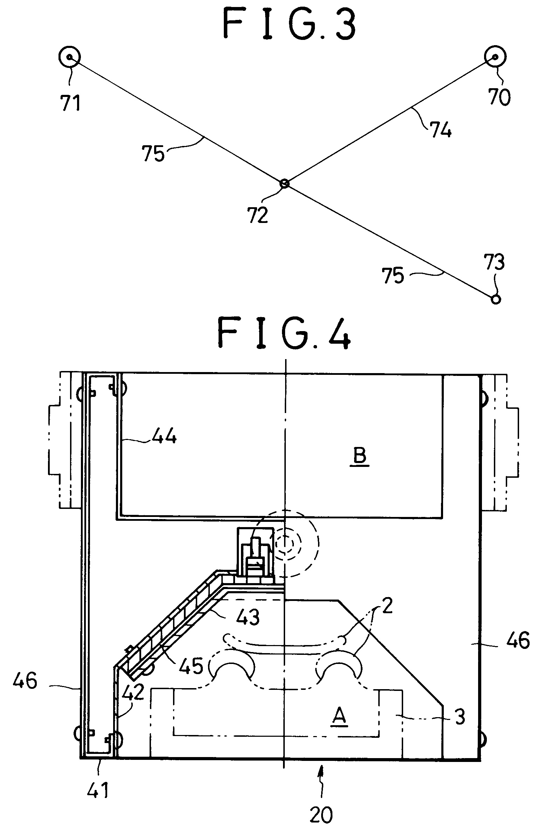

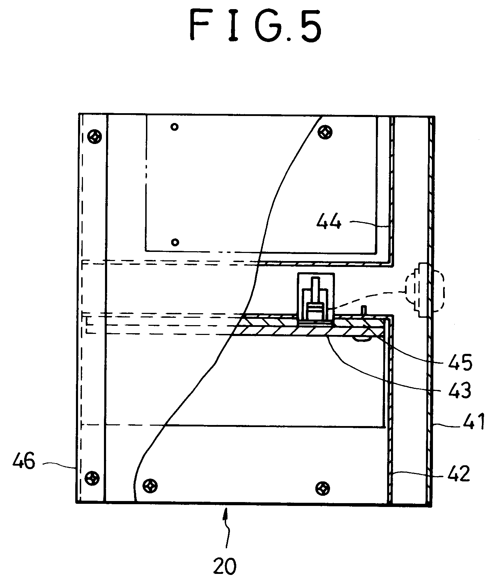

To form dentures by the press according to the present invention, it is preferable to heat and soften a thermoplastic resin preform 2 mounted on a lower plaster mold 3 in advance. At the same time preferably both an upper plaster mold 5 and a lower plaster mold 3 also are heated. For this purpose a heating box 20, which contains two chambers in a vertical arrangement and a far-infrared heater 43 as shown in Figs. 4 and 5, moves into a pressing zone 1 by a driving mechanism 21 containing a pneumatic cylinder through a connecting mechanism 22. Then a thermoplastic resin preform 2 is heated to about 380 °C to soften it, and the upper plaster mold 5 is kept at about 130 °C. Finally the heating box 20 moves out of a pressing zone 1.

A heating device for forming dentures is disclosed below.

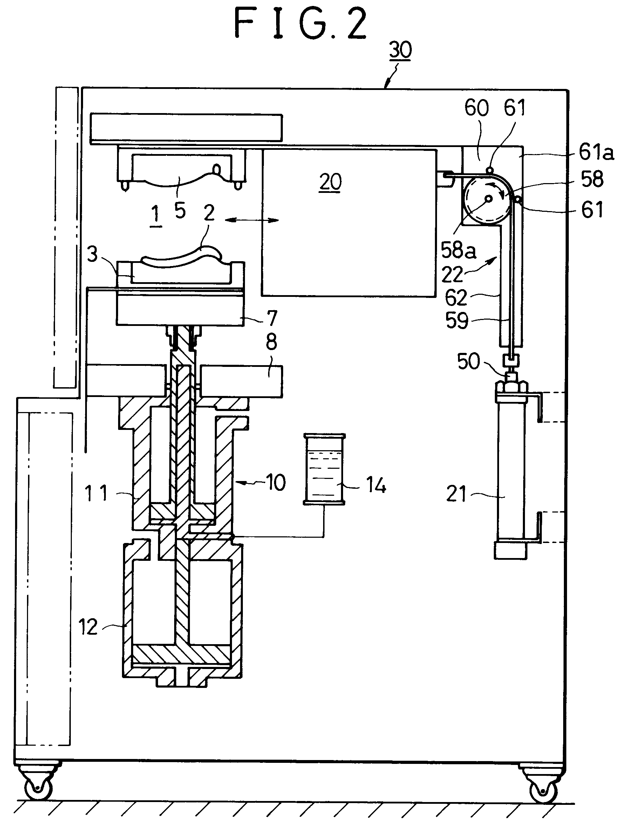

To form dentures by the press according to the present invention, a heating box 20, as shown in Figs. 1 and 2, moves into a pressing zone 1 by an upward motion of a piston rod 50 in a driving mechanism 21 containing a pneumatic cylinder through a connecting mechanism 22. Then a thermoplastic resin preform 2 mounted on a lower plaster mold 3 is heated and softened, and the upper plaster mold 5 and the lower plaster mold are heated at the same time. Finally the heating box 20 moves out of a pressing zone 1 to the right side in Figs. 1 and 2 by a downward motion of the piston rod 50 in the driving mechanism 21 through the connecting mechanism 22.

A supporting piece for a heating box 20 disposed above is connected to upper parts in both sides of the heating box 20. The supporting piece slides along a guide rail in horizontal directions provided on the ceiling of the press for forming dentures 30. The both sides of a heating box and its supporting piece are not shown in any of the attached figures.

A connecting mechanism 22 is composed of a guide roller 58, a plate spring 59, a guide-roller holder 60, an auxiliary guide roller 61, and a plate-spring guide 62. This connecting mechanism 22 converts a direction of approximately vertical motions of a piston rod 50 to a direction of approximately horizontal motions of a heating box 20.

The plate spring 59 does not bend when a compressive force does not reach a certain threshold; it bends only when a compressive force exceeds the certain threshold. When the heating box 20 moves toward the left hand side from the position shown in Fig. 2, the plate spring 59 does not bend. In contrast, when a forward movement of the heating box 20 is stopped by a stopper, a compressive force causes the plate spring 59 bend like a wave. Since the plate spring 59 with such properties is employed, the movement of the heating box 20 to the specified position defined by the stopper is quite reliable.

A guide-roller holder 60 contains a guide roller 58 and a pair of plates 61a disposed in the both sides of the guide roller 58 (only the plate 61a corresponding to be in a position below a sheet is shown in Fig. 1). A guide roller 58 is supported by a shaft 58a attached to the pair of plates 61a such that the guide roller 58 freely rotates. This guide-roller holder 60 is attached to a press for forming dentures 30. To the guide-roller holder 60 are attached auxiliary-guide rollers 61 in such positions that the plate spring 59 is put between auxiliary-guide rollers 61 and a peripheral face on the guide roller 58. A holder 60 contains a plate-spring guide 62 composed of a pair of plates in both sides of a guide-roller holder 60, and the plate spring 59 is guided in its direction of the width. A driving mechanism 21 (a pneumatic cylinder) is attached to a press for forming dentures 30.

Since a connecting mechanism 22 is composed in an above-mentioned way, movements of a heating box 20 is reliably controlled. Specifically, even though a heating box moves, the plate spring 59 does not get out of its properly moving position. Even though a heating box 20 is stopped at a specified position to result in bending the plate spring 59 in a wavy form, the plate spring 59 does not get displaced.

Since a plate spring 59, which is bendable, is employed in a connecting mechanism 22, a commercially available standard pneumatic cylinder can be adopted that has satisfactory strokes to secure a necessary moving distance of a heating box 20. This helps to reduce the cost of a press for forming dentures 30.

Fig. 3 shows a link mechanism which is another embodiment of a connecting mechanism. A fixed pin is designated as 70, and the other three pins 71, 72, and 73 are moving pins. The distance between the fixed pin 70 and a moving pin 72 is kept approximately same as that between a moving pin 71 and another moving pin 72 as well as that between a moving pin 72 and another moving pin 73. A link 75 that links a moving pin 71 and another moving pin 73 is about twice as long as the other link 74 that links the fixed pin 70 and a moving pin 72.

This link mechanism can be employed as a connecting mechanism in the present invention. For example, a piston rod 50 in a driving mechanism 21 is connected to a moving pin 73. When the moving pin 73 moves up toward the fixed pin 70, a heating box connected to a moving pin 71 moves to the left side in Fig. 3. Contrarily when the piston rod 50 moves down, the heating box 20 moves to the right side in Fig. 3.

A heating box for forming dentures according to the present invention is disclosed below.

Fig. 4 shows a heating box for forming dentures according to the present invention; the left half is a cross section from the front, and the right half is a view from the front. Fig. 5 is a view of a heating box for forming dentures according to the present invention from its right side, and a part of it shows a cross section.

In Figs. 4 and 5 a heating-box main body is designated as 41, and a lower chamber A in the main body 41 is provided with a heater plate 42 on which a far-infrared heater 43 is provided. A front plate is designated as 46. The heater plate 42 and the far-infrared heater 43 are appropriately designed to correspond to a shape of a thermoplastic resin preform 2 mounted on a lower plaster mold 3. Thus the heater plate 42 and the far-infrared heater 43 cover over the lower plaster mold 3 when a heating box 20 moves into a pressing zone 1. A far-infrared heater 43 is composed of a Nichrome wire heater and a compound that generates far-infrared rays coated on its surface. One of the examples of compounds that generate far-infrared rays is TYRANNO COAT a trademark of Ube Industries, Ltd. To insulate a heater plate 42 from a far-infrared heater 43 insulater 45 is provided between them.

An upper chamber B in the main body 41 is provided by fixing a heating board 44 above the heater plate 42 to the main body 41. The heating board 44 is designed to surround an upper plaster mold 5 from its bottom when a heating box 20 moves into a pressing zone 1. The surface of the heating board 44 is coated with TYRANNO COAT, a trademark of Ube Industries, Ltd., that generates far-infrared rays.

When a heating box 20 moves into a pressing zone 1, the far-infrared heater 43 heats the atmosphere in the lower chamber A to about 380 °C. At the same time a preform 2 mounted on a lower plaster mold 3 is uniformly heated and softened because a shape of the far-infrared heater 43 corresponds to that of a preform 2 mounted on a lower plaster mold 3 in the chamber A.

While a far-infrared heater 43 provided in a lower chamber A heats a thermoplastic resin preform 2 to about 380 °C to soften it, the heater 43 also plays a role to be a heat source for a heating board 44 in the chamber B coated with a compound that generates far-infrared rays. Thus the heating board 44 generates far-infrared rays to keep an upper plaster mold 5 at about 130 °C.

To consider emission of heat to outside, Nichrome wires in a far-infrared heater 43 are preferably densely provided in the frontal side, which corresponds to the left side in Fig. 5. Likewise, it is preferable that Nichrome wires in a far-infrared heater 43 are sparsely provided in the back side, which corresponds to the right side in Fig. 5. Such arrangements of the Nichrome wires improves uniformity in temperature distribution in a preform 2 during the heating to soften it.

APPLICABILITY OF THE INVENTION IN INDUSTRY

As disclosed above, according to the pressing device for forming dentures in the present invention, the use of a pneumatic driving cylinder mechanism with a specific structure shortens time required for compression molding and enables us to make the pressing device compact.

According to the heating device for forming dentures in the present invention, a heating box, its driving mechanism, and a connecting mechanism that connects between them are organically disposed such that an overall apparatus remains to be compact and that a reliable movement of a heating box into a specific position in a pressing zone 1 has been achieved.

According to the heating box for forming dentures in the present invention, a position and a shape of a far-infrared heater are specified to uniformly heat and soften a thermoplastic resin preform. A far-infrared heater provided in a lower chamber is very economically used as a heat source to heat a thermoplastic resin preform mounted on a lower plaster mold and to heat a heating board to keep a temperature of an upper plastic mold constant.

**Claims**

1. A pressing device for forming dentures, comprising:

    an upper stationary platen on which an upper plaster mold containing an artificial tooth is held;

    a movable platen, disposed below said upper stationary platen, on which a lower plaster mold is held, wherein a softened thermoplastic resin preform is mounted on said lower plaster mold; and

    a pneumatic driving cylinder mechanism comprising a piston rod, disposed below and connected to a lower stationary platen, the top end of said piston rod being fixed to said movable platen;

    wherein said pneumatic driving cylinder mechanism comprising a driving cylinder operated by hydraulic pressure and a pneumatic booster integral with each other.

2. A pressing device as recited in claim 1, wherein said pneumatic booster comprises a pressure intensifying piston and a ram integrally fixed to said pressure intensifying piston, wherein both said pressure intensifying piston and said ram are disposed in said pneumatic booster.

3. A pressing device as recited in claim 1 or 2, wherein said ram in said pneumatic booster can be inserted into a head chamber in said driving cylinder operated by hydraulic pressure and an outer diameter of said ram is smaller by a specific ratio than an outer diameter of said pressure intensifying piston.

4. A pressing device as recited in claim 1 or 3, wherein said driving cylinder operated by hydraulic pressure comprises a hydraulic piston and said piston rod, said piston rod comprising a hollow inside itself along an axial direction from an open end to a close end, wherein said ram in said pneumatic booster can insert into said hollow.

5. A heating device for forming dentures, comprising:

a heating box movable in approximately horizontal directions between a pressing zone and an outer position, wherein a thermoplastic resin preform mounted upon a lower plaster mold is pressed against an upper plaster mold in said pressing zone; and

a driving mechanism comprising a second piston rod that moves in approximately vertical directions perpendicular to said approximately horizontal directions in which said heating box moves;

a connecting mechanism for connecting said heating box to said driving mechanism, wherein said connecting mechanism is provided with a function to change said approximately vertical directions into said approximately horizontal directions and vice versa.

6. A heating device as recited in claim 5, wherein said connecting mechanism comprising a plate spring or a link mechanism.

7. A heating box for forming dentures, comprising:

a lower chamber comprising a far-infrared heater, wherein in order to soften a thermoplastic resin preform mounted on a lower plaster mold, a shape of a cross section of said far-infrared heater approximately corresponds to a shape of said preform ; and

an upper chamber comprising a heating board having its heat source as said far-infrared heater, said heating board being provided with means for generating far-infrared rays;

wherein said lower chamber and said upper chamber are in a vertical arrangement.

8. A heating box as recited in claim 7, wherein said far-infrared heater comprises a Nichrome wire heater and a compound that generates far-infrared rays coated on its surface.

9. A heating box as recited in claim 7 or 8, wherein in said far-infrared heater said Nichrome wires are densely provided in a front side of said heating box to consider emission of heat to outside, and said Nichrome wires are sparsely provided in a back side of said heating box.

# F I G．1

# F I G. 2

# F I G . 3

# F I G . 4

# F I G.5

# INTERNATIONAL SEARCH REPORT

International Application No PCT/JP91/00803

## I. CLASSIFICATION OF SUBJECT MATTER (if several classification symbols apply, indicate all) ⁶

According to International Patent Classification (IPC) or to both National Classification and IPC

Int. Cl⁵  A61C13/01

## II. FIELDS SEARCHED

### Minimum Documentation Searched ⁷

| Classification System | Classification Symbols |
|---|---|
| IPC | A61C13/01, 13/14 |

Documentation Searched other than Minimum Documentation
to the Extent that such Documents are Included in the Fields Searched ⁸

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | JP, A, 63-192436 (Ube Industries, Ltd.), August 9, 1988 (09. 08. 88), (Family: none) | 1-9 |
| A | JP, A, 62-236543 (Ube Industries, Ltd.), October 16, 1987 (16. 10. 87), (Family: none) | 1-9 |
| A | JP, A, 61-100241 (Molten K.K., Forburen K.K.), May 19, 1986 (19. 05. 86), (Family: none) | 1-9 |
| A | JP, Y, 62-32017 (Yugen Kaisha Shinsei Dental Laboratory), August 17, 1987 (17. 08. 87), (Family: none) | 1-9 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 30, 1991 (30. 08. 91) | September 17, 1991 (17. 09. 91) |

| International Searching Authority | Signature of Authorized Officer |
|---|---|
| Japanese Patent Office | |

Form PCT/ISA/210 (second sheet) (January 1985)